# EUROPEAN PATENT SPECIFICATION

(11) **EP 3 355 427 B1**
(45) Date of publication and mention of the grant of the patent: **17.03.2021**
(21) Application number: 17153892.9
(22) Date of filing: 31.01.2017
(51) Int. Cl.: H02G 3/12

(54) **INSTALLATION BOX WITH ANCHORING STRIP FOR A HOLLOW WALL**
INSTALLATIONSKASTEN MIT VERANKERUNGSSTREIFEN FÜR EINE HOHLWAND
BOÎTE D'INSTALLATION AVEC BANDE D'ANCRAGE POUR UNE PAROI CREUSE

(43) Date of publication of application: 01.08.2018
(73) Proprietor: ABB Schweiz AG, 5400 Baden (CH)
(72) Inventor: Renckens, Tom, 3742ND BAARN (NL)
(74) Representative: van Trier, Norbertus Henricus Gerardus

(56) References cited:
- EP-A1- 1 944 846
- EP-A1- 2 960 699
- WO-A1-01/31759
- DE-A1- 4 137 421

## Description

### BACKGROUND

The invention relates to an installation box for a hollow wall.

Installation boxes of this type are also known as hollow wall boxes. A known hollow wall box is commercially available under the name ABB HAF HW51-F. This hollow wall box comprises a circumferential with two barbed guide channels through which pulling anchors can only slide towards the upper circumferential edge of the circumferential wall. The pulling anchors comprise a hand grip that is connected to an anchor via a rigid stem. After the hollow wall box is inserted in the hollow wall, the pulling anchors are pulled through the guide channels until the anchors engage the back side of the hollow wall. Thereafter the projecting rigid stems are cut off by means of a cutting tool, such as nippers or a knife. This is unpractical.

An installation box with anchoring means is known from EP 1 944 846 describing an installation box to be placed in a hole in a wall of a building, comprising a bottom wall, a circumferential wall of which an upper edge bounds an installation opening, and anchoring means for anchoring the installation box in the hole in the wall, wherein the anchoring means comprise an anchoring member that is movable in an outward direction with respect to the circumferential wall for engagement onto a circumferential bounding wall of the hole, and a pull operation member that is movable with respect to the circumferential wall in a pulling direction away from the bottom for in cooperation with the anchoring member moving the anchoring member outward.

Furthermore, WO 01/31759 is known prior art disclosing that the traditional installation boxes intended for recessed mounting in building parts are replaced by two components, viz. a concealed installation system comprising a plurality of boxes (1) which are interconnected by means of pipes or wires (6) and a plurality of coupling frames (4) which are adapted to be inserted through a plate wall (2) and communicate with the concealed box (1). The concealed installation may consist of interconnected boxes and/or a distributed duct system, which is fixed in the cavity of a building part in a first working process. The coupling frames (4) are intended to receive electrical components, such as switches, socket outlets, etc., and these parts are mounted in a second working process only after the plate wall (2) has been completed also with surface finish. This provides two great advantages, viz. partly that the trades on a building site are less dependent on each other, and partly that the concealed installation system is general and can be used in all countries, which may have varying standards with respect to electrical components which are to be mounted. Only an associated coupling frame is required.

It is an object of the present invention to provide an installation box for a hollow wall of which the projecting parts after installation can be removed manually.

### SUMMARY OF THE INVENTION

According to a first aspect, the invention provides an installation box for a hollow wall, wherein the hollow wall comprises a front plate with a hole for insertion of the installation box from the front side of the front plate, and wherein the installation box comprises a bottom wall and a circumferential wall with an circumferential edge that bounds an installation opening of the installation box, wherein the installation box comprises a guide channel in the circumferential wall that extends parallel to the center line of the circumferential wall and in which an anchoring strip is slidably confined, wherein the anchoring strip comprises an elongate tensioning section that is guided through the guide channel in a tensioning direction, and an anchoring section for engagement of the back side of the front plate, wherein the installation box comprises a first barb that is connected with the circumferential wall and that engages the tensioning section to prevent movement of the anchoring strip with the anchoring section away from the circumferential edge of the circumferential wall, characterized in that the tensioning section comprises multiple elongate tensioning segments that are connected to each other in series along their elongate sides by means of first living hinges that form selectable target fractures in the tensioning section.

The installation box according to the invention is secured in the front plate by pulling the tensioning section of the anchoring strip through the guide channel. When the front plate is firmly engaged by the anchoring section, the projecting part of the tensioning section has become useless. This projecting part can be removed by manually buckling or twisting it directly above the circumferential edge, whereby the nearest first living hinge fractures because it is the weakest spot. Thereafter installation equipment, such as a switch or socket, can be mounted onto the installation box.

In an embodiment the tensioning segments define V-shaped apertures above and below the first living hinges, which helps to visualize the position of the first living hinge to be fractured.

In an embodiment the tensioning segments comprise a central portion with a first thickness that on both sides merges into side portions with a second thickness that is less than the first thickness, whereby the first living hinges are thinner along the side portions than along the central portion. The rupturing that is caused by the local twist is initiated outside the center of the tensioning section, as the highest mutual displacement takes place outside the center. The initiation of the rupture is facilitated as the first living hinges are thinner there. After the initiation the rupture travels to the center where the weakened first living hinge is thicker.

In an embodiment the tensioning segments comprise teeth that are subsequently engaged by the first barb.

In an embodiment thereof the teeth are barbed, having locking faces that are directed towards the nearest adjacent living hinge.

In an embodiment the teeth at both ends merge into guiding bodies that define side edges of the tensioning sections.

In an embodiment the anchoring strip comprises a second living hinge between the tensioning section and the anchoring section, wherein the second living hinge keeps the anchoring section within the projection of the bottom wall when it is located in its initial position below the bottom wall. This facilitates a smooth and unhampered insertion of the installation box into the hole in the front plate.

In an embodiment thereof the anchoring section comprises a guide strip that is connected with the tensioning section via the second living hinge, wherein the guide strip enters the guide channel when the tensioning section is guided through the guide channel in the tensioning direction. The second living hinge pulls the guide strip into the guide channel to become slidably confined in the same way as the tensioning section.

In an embodiment thereof the anchoring section tilts outside the projection of the bottom wall when the guide strip enters the guide channel to engage the back side of the front plate after insertion of the installation box in the hole in the front plate.

In an embodiment the guide channel is open at the side that faces away from the circumferential wall, where it is bound alongside by two parallel facing overhanging edges that confine the anchoring strip.

In an embodiment the anchoring strip comprises a gripping section that merges into the tensioning section, wherein the gripping section projects from the circumferential edge of the installation box.

In an embodiment thereof the gripping section comprises a hole to receive a pulling tool.

In an embodiment the anchoring strip forms one plastic unity, preferably of a thermoplastic, in particular polyoxymethylene (POM).

In an embodiment the installation box comprises a separate insert that is inserted in an accommodation space in the circumferential wall, wherein the insert extends over the guide channel and comprises the first barb that projects into the guide channel. In this embodiment the first barb is installed by inserting the insert. As the insert is a separate piece, it can be of a different material than the circumferential wall or the anchoring strip.

In an embodiment thereof the insert comprises a second barb that keeps the insert confined in the accommodation space.

In an embodiment the installation box comprises a first flange that projects from the circumferential edge of the circumferential wall, and wherein the insert comprises a second flange that projects from the circumferential edge of the circumferential wall, wherein the first flange and the second flange are located spaced apart from each other along the circumferential edge of the circumferential wall.

In an embodiment the insert is made of steel.

In an embodiment the bottom wall and the circumferential wall form one plastic unity, preferably of polypropylene.

According to a second aspect, the invention provides a method for installing an installation box in a hollow wall, wherein the hollow wall comprises a front plate with a hole for insertion of the installation box from the front side of the front plate, and wherein the installation box comprises a bottom wall and a circumferential wall with an circumferential edge that bounds an installation opening of the installation box, wherein the installation box comprises a guide channel in the circumferential wall that extends parallel to the center line of the circumferential wall and in which an anchoring strip is slidably confined, wherein the anchoring strip comprises an elongate tensioning section that is guided through the guide channel in a tensioning direction, and an anchoring section for engagement of the back side of the front plate, wherein the installation box comprises a first barb that is connected with the circumferential wall and that engages the tensioning section to prevent movement of the anchoring strip with the anchoring section away from the circumferential edge of the circumferential wall, and wherein the tensioning section comprises multiple elongate tensioning segments that are connected to each other in series along their elongate sides by means of first living hinges that form selectable target fractures in the tensioning section, wherein the method comprises the steps of inserting the installation box into the hole, pulling the anchoring strip in the tensioning direction until the anchoring section engages the front plate, and buckling or twisting the tensioning section at the location where the anchoring strip projects from the circumferential edge, whereby the tensioning section ruptures at the first living hinge that is closest to the circumferential edge.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B are an isometric view and a side view of an installation box with anchoring strips and cooperating barbed inserts according to an embodiment of the invention;
Figures 2A and 2B are the installation box a detail thereof as shown in figures 1A and 1B, wherein subsequently one of the anchoring strips and the engaged barbed insert are removed;
Figures 3A-3D are an isometric top view and three details of one of the anchoring strips and the cooperating barbed inserts of the installation box according to figures 1A and 1B; and
Figures 4A-4D are an isometric bottom view and three details of the anchoring strip and the barbed insert of figures 3A-3D.

### DETAILED DESCRIPTION OF THE INVENTION

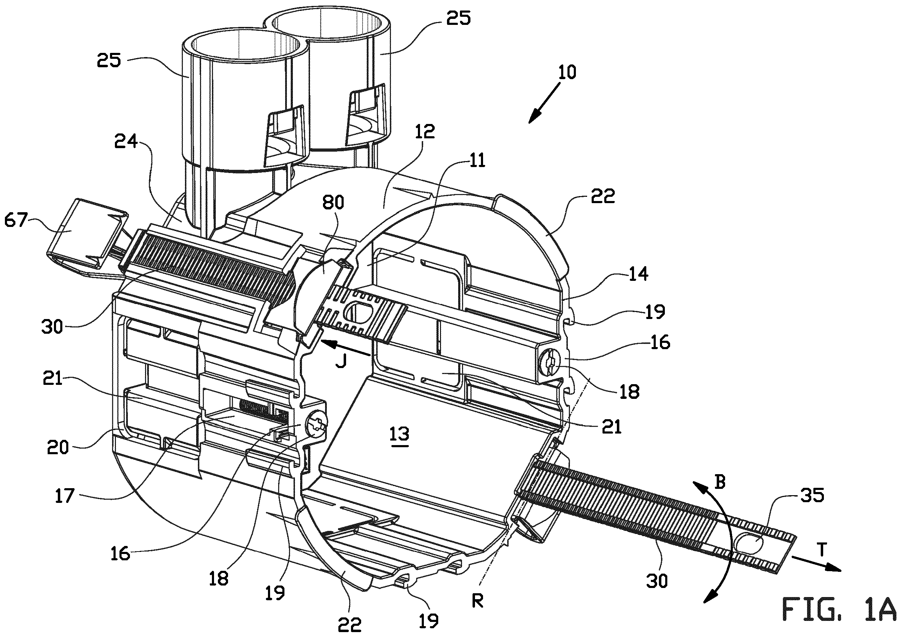

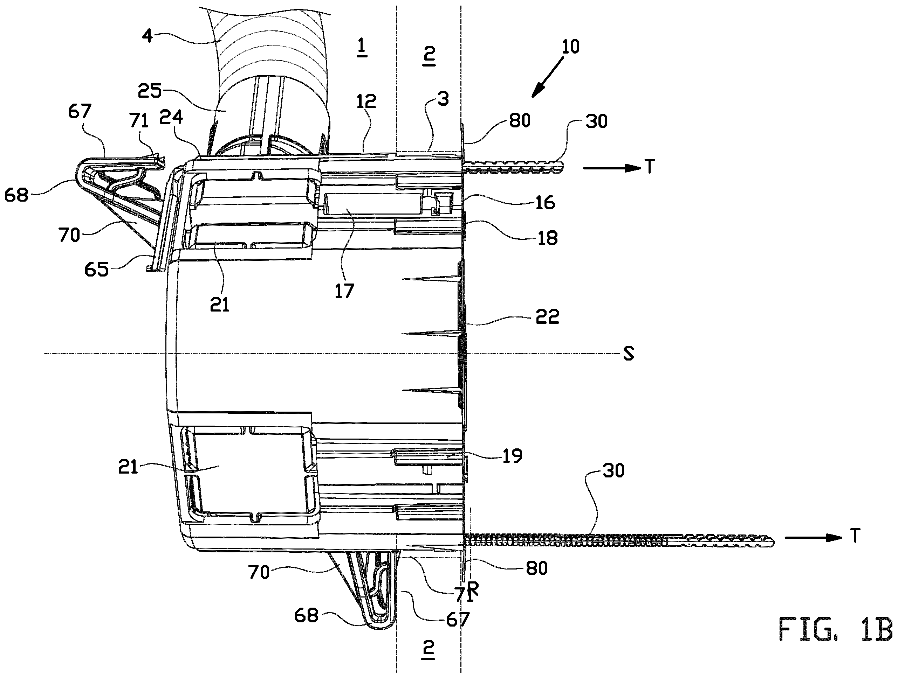

Figures 1A and 1B show an installation box 10 according to an embodiment of the invention. As schematically indicated in figure 1B, the installation box 10 is designed to be installed in a hollow wall 1 wall of a building to install the electrical installation thereof. The installation box 1 is inserted and secured into a circular hole 3 in the front plate 2 of the hollow wall 1.

The installation box 10 comprises a bottom wall 11 and a straight cylindrical circumferential wall 12 with central axis S. The circumferential edge 14 of the circumferential wall 12 bounds an installation opening of the installation box 10. The bottom wall 11 and the circumferential wall 12 are made of plastic, in this example polypropylene, and form one rigid unity.

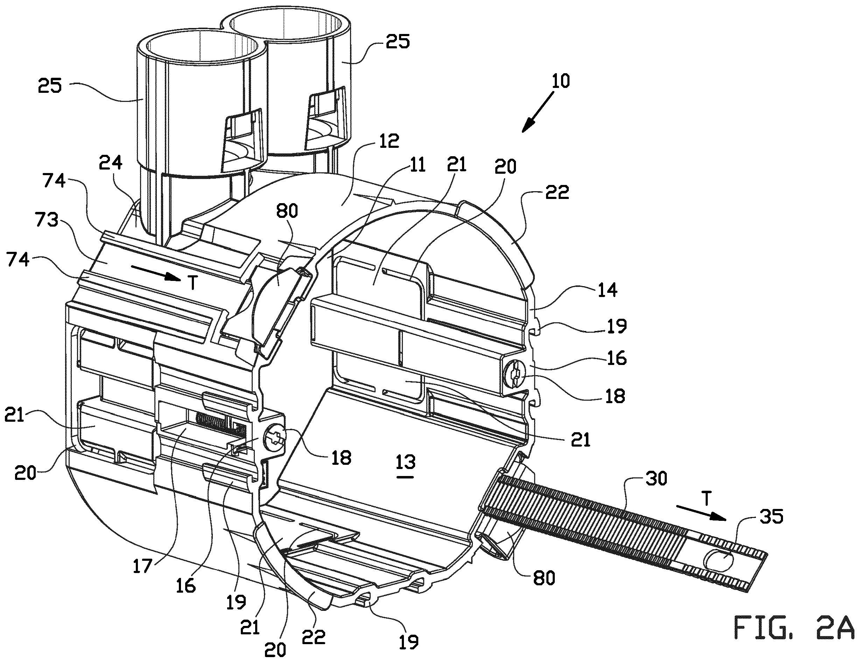

As best shown in figure 2A, the installation box 10 comprises two opposite mounting plates 16 adjacent to the circumferential edge 14 in which mounting screws 18 are screwed. The mounting screws 18 extend through recessed channels 17 behind the mounting plates 16. At the same locations and in circumferential direction also in between the installation box 10 is provided with slide couplings 19 on the circumferential wall 12 to couple multiple installation boxes 10 adjacent to each other in different configurations. Below the slide couplings 19 the circumferential wall 12 is provided with square passages 20 that are closed off with breakout ports 21 that are removed for electric wirings between the coupled installation boxes 10. The installation box 10 is provided with first flanges 22 that form one unity with and that project from the circumferential wall 12 to engage onto the front plate 2 of the hollow wall 1.

The installation box 10 comprises in this example one insert 24 having in this example two spouts 25 for coupling rigid or flexible pipes 4 of the electrical installation to the installation box 10 as schematically shown in figure 1B. In circumferential direction the insert 24 is located symmetrically between the mounting screws 18. The insert 24 is inserted from the inside after the installation box 10 is placed in the hollow wall 1.

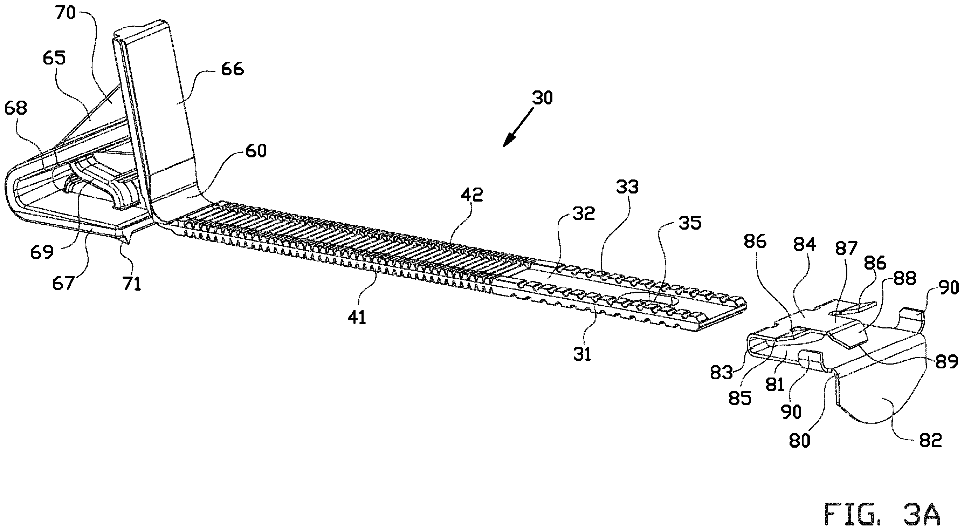

The installation box 10 is provided with two identical anchoring strips 30 for anchoring the installation box 10 in the front plate 2 of the hollow wall 1. The anchoring strips 30 are located opposite to each other and in circumferential direction at 85 to 95 degrees with respect to the opposite first flanges 22 and at about 40 degrees with respect to the mounting screws 18. One of the identical anchoring strips 30 is shown separately and in detail in figures 3A-4C.

The anchoring strips 30 are made of a hard or rigid thermoplastic with a high tension strength, in particular polyoxymethylene (POM), and comprise an elongate and straight gripping section 31 that rectilinearly continues into an elongate and straight tensioning section 41. At the opposite end the tensioning section 41 merges into a form stable living hinge 60 that connects the tensioning section 41 with an anchoring section 65.

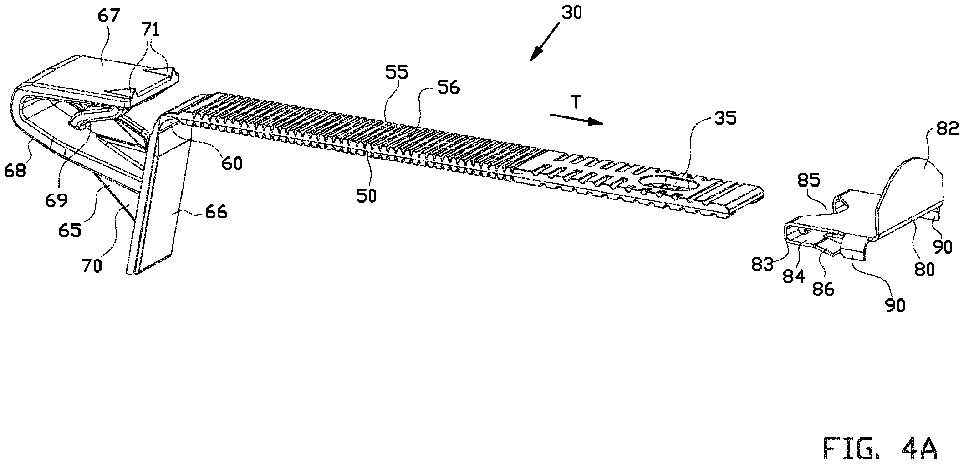

As shown in figures 3A and 4A, the gripping section 31 comprises a base strip 32 and four crenelated side edges 33 to provide finger grip, and a hole 35 in the middle of the base strip 32 for insertion of a pulling tool, such as a screwdriver.

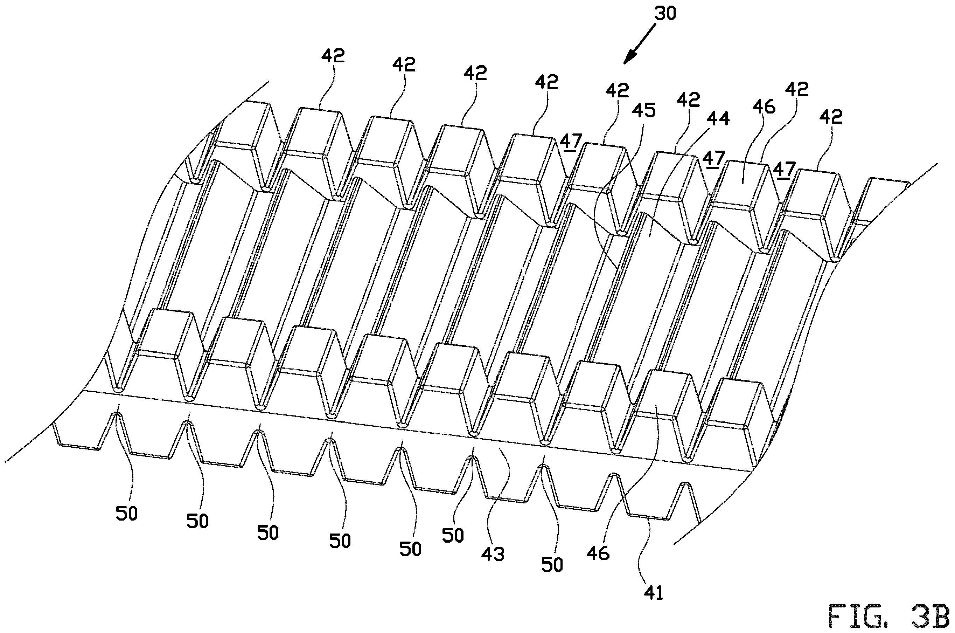

As shown in figures 3A and 3B, the tensioning section 41 comprises multiple, in this example about forty, identical elongate tensioning segments 42 that extend transverse to the elongate direction of the tensioning section 41 and that are mutually connected in series by means of living hinges 50. As best shown in figure 3B, each tensioning section 41 comprises at one elongate side, in this example the first elongate side that faces the upright anchoring section 65, a projecting barbed tooth 44 having at the side of the anchoring section 65 its locking face 45 that is directed back towards it adjacent living hinge 50. At both ends the barbed tooth 45 merges into higher first guiding bodies 46 having V-shaped apertures 47 in between them above the living hinges 50 to provide bending flexibility.

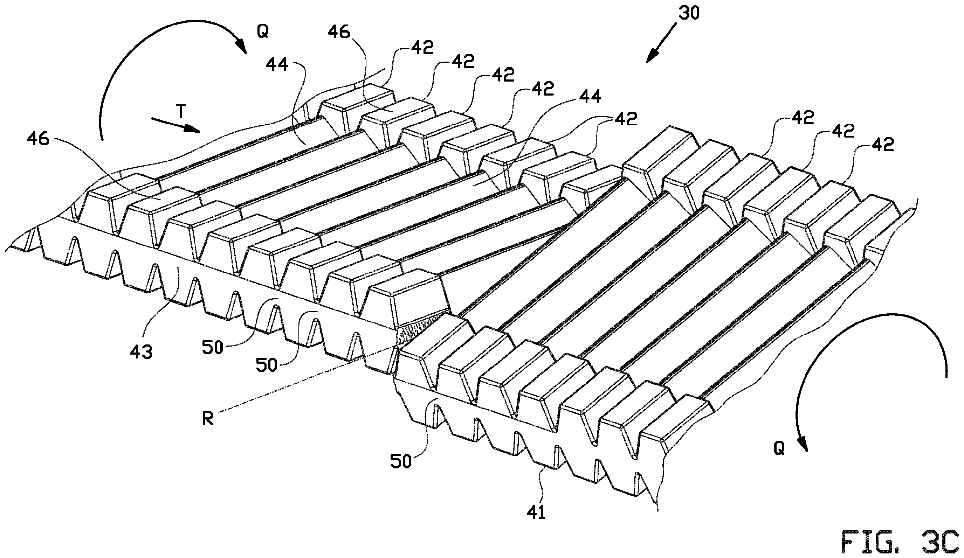

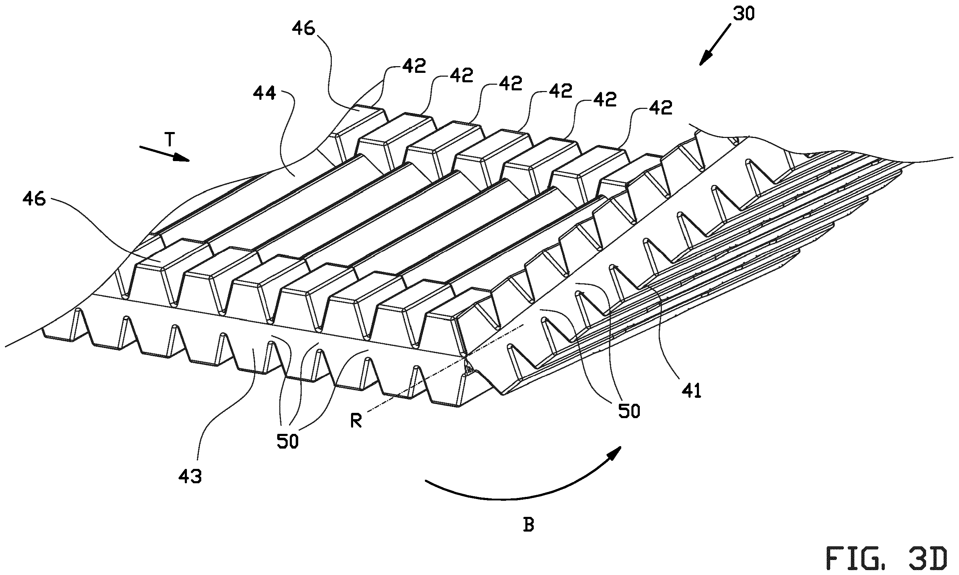

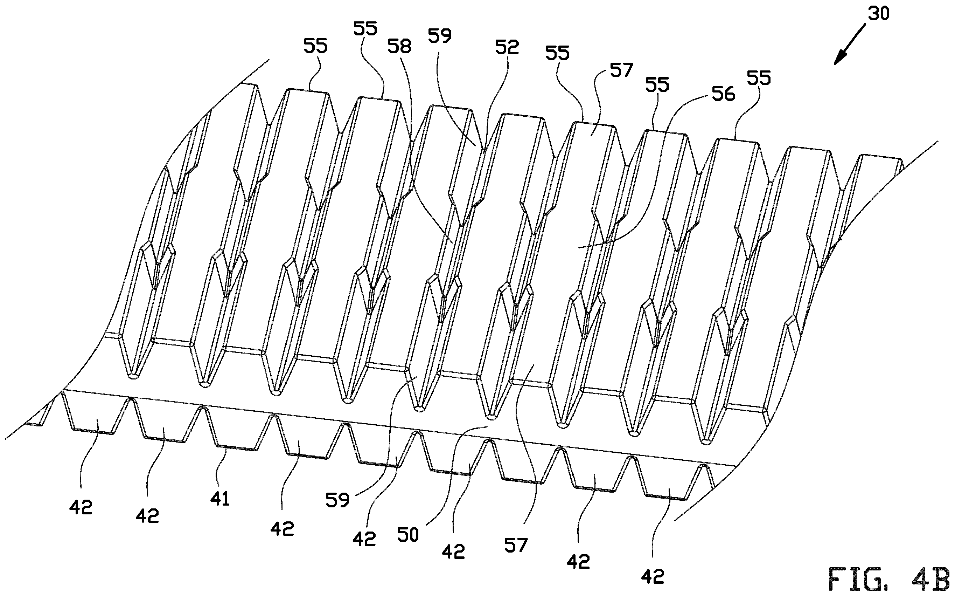

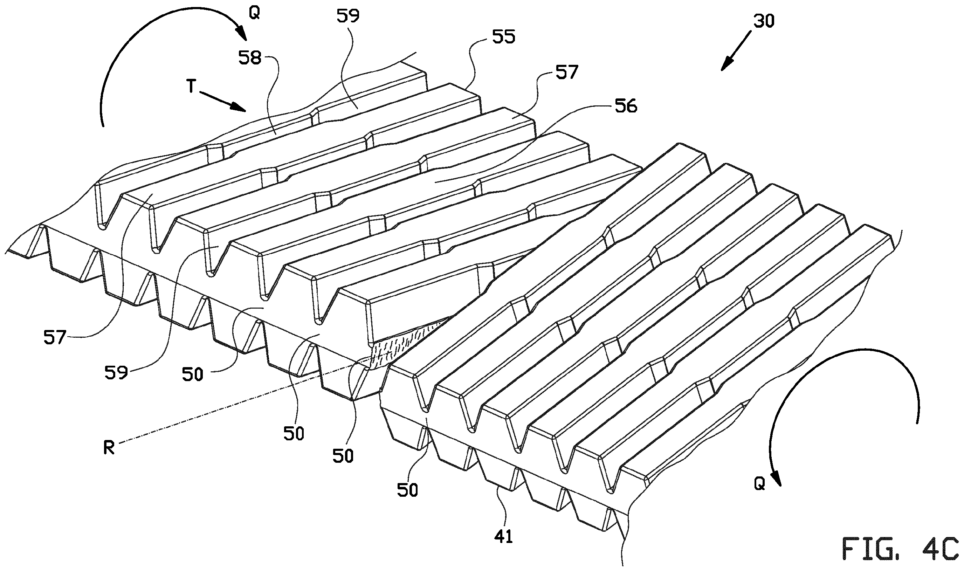

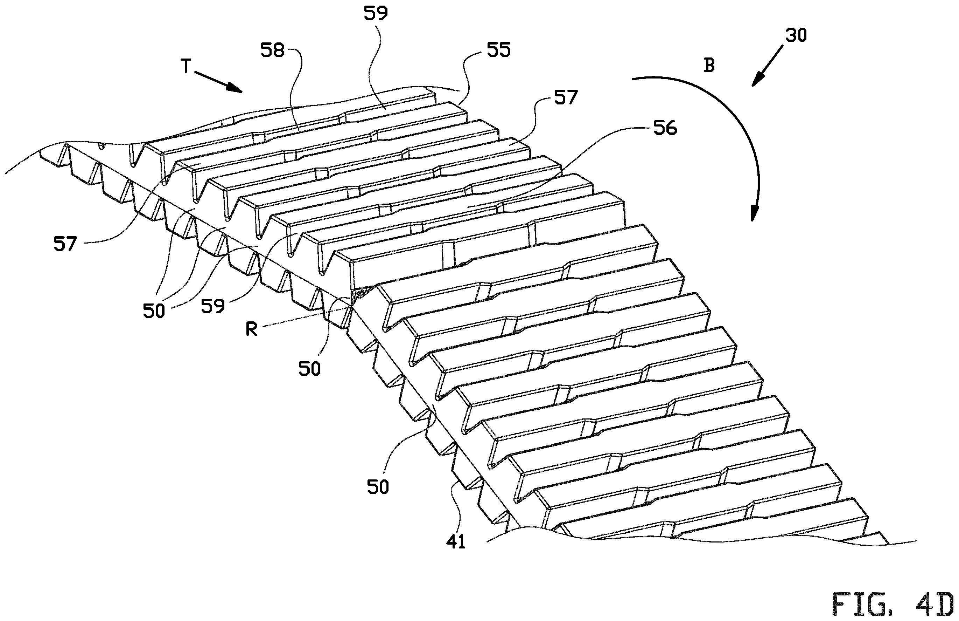

As best shown in figures 4A and 4B, each tensioning segment 42 comprises at the opposite elongate side, in this example the second elongate side that faces away from the upright anchoring section 65, a second guiding body 55 each having a central portion 56 that merges into thinner side portions 57, each having a length of about one-third of the entire length of the tensioning segment 42. The central portion 56 and the side portions 57 have V-shaped central apertures 58 and deeper V-shaped side apertures 59 in between them above the living hinges 50. Thereby the living hinges 50 have a nominal first thickness at the central apertures 58 and a lower second thickness at the side apertures 59. As shown in figures 3C and 4C, this ensures that the living hinges 50 between subsequent tensioning segments 42 will rupture along the transversely extending rupture line R. As shown in Figures 3C and 4C, the living hinges 50 rupture when they are mutually twisted in direction Q around the central axis of the tensioning section 41, which rupture is initiated between the weaker the side portions 57 and finally ends at the thicker central portion 56. As shown in figures 3D and 4D, the living hinges 50 rupture along the rupture line R when they are mutually sharply buckled in direction B, which rupture is for example initiated when the surfaces of the V-shaped central aperture 58 come in full abutment with each other. The local buckling is facilitated by the adjacent straight corner edge of the barbed insert 80.

As shown in figures 3A and 4A, the anchoring section 65 comprises a straight guide strip 66, and an anchoring strip 68 projecting obliquely from the guide strip 66. The anchoring strip 68 is curved back to the guide strip 66 and it ends with a straight anchoring plate 67 having teeth 71 at its outer end. The anchoring strip 68 is connected with the guide strip 66 by means of stiffening plates 70, and the curvature of the anchoring strip 68 is reinforced with a reinforcement cross 69.

As best shown in figure 2A, the installation box 10 comprises two guide channels 73 in the circumferential wall 12 in which the anchoring strip 30 is received. As shown in figures 3A and 4A, the guiding strip 66, the tensioning section 41 and the gripping section 31 have the same widest cross section whereby it can smoothly slide through its entire guide channel 73 in a tensioning direction T that extends parallel to the center line S and transversely to the bottom wall 11 of the installation box 10. The guide channels 73 are open at their outer side, where they are bound alongside by two parallel facing overhanging edges 74 that confine the anchoring strips 30. The anchoring strips 30 are locked by means of barbed inserts 80 that are shown in detail in figures 3A and 4A.

The barbed inserts 80 are formed of a steel plate, and comprises a flat base section 81 that at one side merges into a transversely bend flat second flange 82. At the opposite side the base section 81 merges into two curved bridges 83 that leave a central passage 85 free to receive the anchoring strip 30 in the tensioning direction T. The bridges 83 connect the base section 81 with a flat mounting section 84. The mounting section 84 continues into a central first barb 87 having its proximal end 88 bended under an angle towards the base section 81, and two second barbs 86 that are bend upwards with respect to the base section 81. The inserts 80 furthermore comprises two spacer lips 90 that extend from the base section 81 towards the mounting section 84.

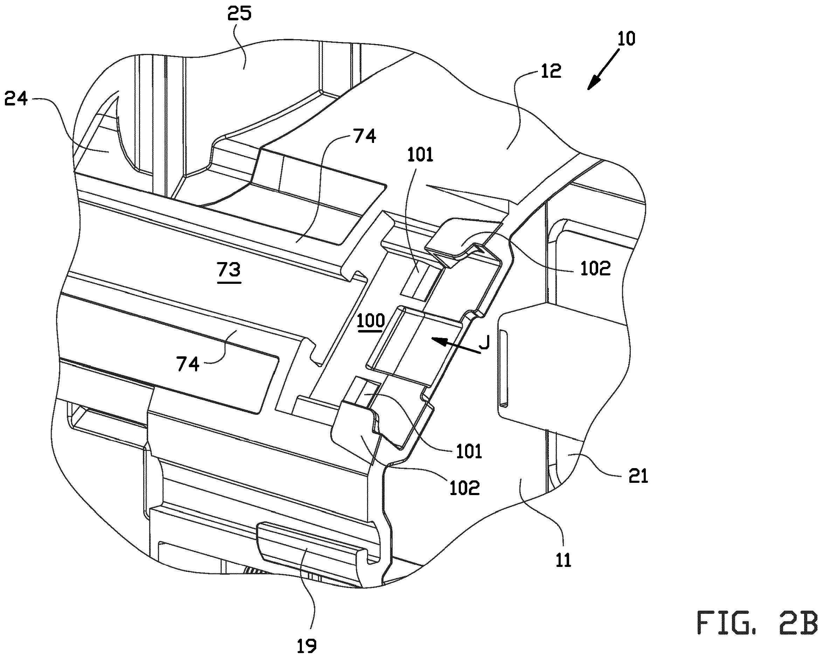

The barbed inserts 80 are inserted in insertion direction J opposite to the tensioning direction T into accommodation spaces 100 that are formed in the circumferential wall 12 at the end of the guide channels 73 and adjacent to the circumferential edge 14 of the circumferential wall 12. As best shown in figure 2B, the accommodation spaces 100 are bounded by two holders 102 in which the spacer lips 90 are received and confined. In the accommodation spaces 100 two recesses 101 are formed in which the second barbs 86 are received to keep the inserts 80 in the holders 102. When installed, the second flanges 82 of the inserts 80 are additional to the first flanges 14 on the circumferential wall 12. When the anchoring strips 30 are inserted through the guide channel 73 in the tensioning direction T, the barbed teeth 44 are engaged by the central barb 87 of the inserts 80.

Figures 1A shows the installation box 10 with the anchoring strip 30 at the front side in the drawing in its initial position in which its anchoring section 65 extends fully within the projection of the bottom wall 11 in the direction of the center line S. In this position the installation box 10 can be inserted in the circular hole 3 in the front plate 2 until the first flanges 22 and the second flanges 82 abut the front plate 2. This position is secured by pulling the anchoring strips 30 in tensioning direction T, whereby the living hinges 60 thereof tilt the anchoring plates 67 beyond the projection of the bottom wall 11 and pull the guide strips 66 into the guide channels 73 in which they are slideably confined. The central barb 87 rattles over the barbed teeth 44 to prevent the anchoring strip 30 from moving back again in the direction towards the bottom wall 11.

When the anchoring plate 67 is in firm abutment with the back of the front plate 2 as shown below in figure 1B, the installation box 10 is secured. The nominal first thickness of the living hinges 50 provides sufficient strength to keep the installation box 10 firmly in the front plate 2. The projecting free ends of the anchoring strips 30 can be manually ripped off along the selected ripping line R straight above the barbed inserts 80 by twisting it in direction Q as shown in figures 3C and 4C, or by sharply buckling it in direction B as shown in figures 3D and 4D to be disposed. Thereafter installation equipment, such as a switch or socket, can be placed onto the installation box 10 and secured thereon by means of the mounting screws 18.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Installation box (10) for a hollow wall (1), wherein the hollow wall comprises a front plate (20) with a hole for insertion of the installation box from the front side of the front plate, and wherein the installation box comprises a bottom wall (11) and a circumferential wall (12) with an circumferential edge (14) that bounds an installation opening of the installation box, wherein the installation box comprises a guide channel (73) in the circumferential wall that extends parallel to the center line (S) of the circumferential wall and in which an anchoring strip (30) is slidably confined, wherein the anchoring strip comprises an elongate tensioning section (41) that is guided through the guide channel in a tensioning direction (T), and an anchoring section (65) for engagement of the back side of the front plate, wherein the installation box comprises a first barb (87) that is connected with the circumferential wall and that engages the tensioning section to prevent movement of the anchoring strip with the anchoring section away from the circumferential edge of the circumferential wall, **characterized in that** the tensioning section comprises multiple elongate tensioning segments (42) that are connected to each other in series along their elongate sides by means of first living hinges (50) that form selectable target fractures in the tensioning section.

2. Installation box (10) according to claim 1, wherein the tensioning segments (42) define V-shaped apertures (47, 59) above and below the first living hinges (50) .

3. Installation box (10) according to claim 1 or 2, wherein the tensioning segments (42) comprise a central portion (56) with a first thickness that on both sides merges into side portions (57) with a second thickness that is less than the first thickness, whereby the first living hinges (50) are thinner along the side portions than along the central portion.

4. Installation box (10) according to any one of the preceding claims, wherein the tensioning segments (42) comprise teeth (44) that are subsequently engaged by the first barb (87), wherein the teeth (44) are preferably barbed, having locking faces (45) that are directed towards the nearest adjacent living hinge (50).

5. Installation box (10) according to claim 4, wherein the teeth (44) at both ends merge into guiding bodies (46) that define side edges of the tensioning sections (50).

6. Installation box (10) according to any one of the preceding claims, wherein the anchoring strip (30) comprises a second living hinge (60) between the tensioning section (42) and the anchoring section (65), wherein the second living hinge keeps the anchoring section within the projection of the bottom wall (11) when it is located in its initial position below the bottom wall, wherein the anchoring section (65) preferably comprises a guide strip (66) that is connected with the tensioning section (42) via the second living hinge (60), wherein the guide strip enters the guide channel (73) when the tensioning section is guided through the guide channel in the tensioning direction (T), wherein the anchoring section (65) preferably tilts outside the projection of the bottom wall when the guide strip (66) enters the guide channel (73).

7. Installation box (10) according to any one of the preceding claims, wherein the guide channel (73) is open at the side that faces away from the circumferential wall (12), where it is bound alongside by two parallel facing overhanging edges (74) that confine the anchoring strip (30).

8. Installation box (10) according to any one of the preceding claims, wherein the anchoring strip (30) comprises a gripping section (31) that merges into the tensioning section (42), wherein the gripping section projects from the circumferential edge (14) of the installation box, wherein the gripping section (31) preferably comprises a hole (35) to receive a pulling tool.

9. Installation box according to any one of the preceding claims, wherein the anchoring strip (30) forms one plastic unity, preferably of a thermoplastic, in particular polyoxymethylene (POM).

10. Installation box according to any one of the preceding claims, comprising a separate insert (80) that is inserted in an accommodation space (100) in the circumferential wall (12), wherein the insert extends over the guide channel (73) and comprises the first barb (87) that projects into the guide channel, wherein the insert (80) preferably comprises a second barb (86) that keeps the insert confined in the accommodation space (100).

11. Installation box (10) according to claim 10, comprising a first flange (22) that projects from the circumferential edge (14) of the circumferential wall, and wherein the insert (80) comprises a second flange (82) that projects from the circumferential edge (14) of the circumferential wall, wherein the first flange and the second flange are located spaced apart from each other along the circumferential edge of the circumferential wall.

12. Installation box (10) according to any one of the preceding claims, wherein the insert (80) is made of steel.

13. Installation box (10) according to any one of the preceding claims, wherein the bottom wall (11) and the circumferential wall (12) form one plastic unity, preferably of polypropylene.

14. Method for installing an installation box (10) in a hollow wall (1), wherein the hollow wall comprises a front plate (2) with a hole for insertion of the installation box from the front side of the front plate, and wherein the installation box comprises a bottom wall (11) and a circumferential wall (12) with an circumferential edge that bounds an installation opening of the installation box, wherein the installation box comprises a guide channel (73) in the circumferential wall that extends parallel to the center line (S) of the circumferential wall and in which an anchoring strip (30) is slidably confined, wherein the anchoring strip comprises an elongate tensioning section (41) that is guided through the guide channel in a tensioning direction (T), and an anchoring section (65) for engagement of the back side of the front plate, wherein the installation box comprises a first barb (87) that is connected with the circumferential wall and that engages the tensioning section to prevent movement of the anchoring strip with the anchoring section away from the circumferential edge of the circumferential wall, and wherein the tensioning section comprises multiple elongate tensioning segments (42) that are connected to each other in series along their elongate sides by means of first living hinges (50) that form selectable target fractures in the tensioning section, wherein the method comprises the steps of inserting the installation box (10) into the hole, pulling the anchoring strip (30) in the tensioning direction (T) until the anchoring section (65) engages the front plate (2), and buckling (B) or twisting (Q) the tensioning section (41) at the location where the anchoring strip projects from the circumferential edge (14), whereby the tensioning section ruptures at the first living hinge (50) that is closest to the circumferential edge.

## Patentansprüche

1. Installationsdose (10) für eine Hohlwand (1), wobei die Hohlwand eine Frontplatte (20) umfasst mit einem Loch zum Einführen der Installationsdose von der Vorderseite der Frontplatte, und wobei die Installationsdose eine Bodenwand (11) und eine Umfangswand (12) mit einem umlaufenden Rand (14) umfasst, der eine Installationsöffnung der Installationsdose begrenzt, wobei die Installationsdose einen Führungskanal (73) in der Umfangswand aufweist, der parallel zu der Mittellinie (S) der Umfangswand verläuft und in dem ein Verankerungsstreifen (30) verschiebbar eingeschlossen ist, wobei der Verankerungsstreifen einen länglichen Spannabschnitt (41) umfasst, der durch den Führungskanal in einer Spannrichtung (T) geführt wird, sowie einen Verankerungsabschnitt (65) zum Greifen der Rückseite der Frontplatte, wobei die Installationsdose einen ersten Widerhaken (87) umfasst, der mit der Umfangswand in Verbindung steht und der in Eingriff gelangt mit dem Spannabschnitt, um eine Bewegung des Verankerungsstreifens mit dem Verankerungsabschnitt von dem umlaufenden Rand der Umfangswand weg zu verhindern, **dadurch gekennzeichnet, dass** der Spannabschnitt mehrere längliche Spannsegmente (42) umfasst, die entlang ihrer länglichen Seiten in Reihe über erste Filmscharniere (50) miteinander verbunden sind, die wählbare Zielbrüche in dem Spannabschnitt bilden.

2. Installationsdose (10) nach Anspruch 1, wobei die Spannsegmente (42) V-förmige Öffnungen (47, 59) oberhalb und unterhalb der ersten Filmscharniere (50) definieren.

3. Installationsdose (10) nach Anspruch 1 oder 2, wobei die Spannsegmente (42) einen zentralen Abschnitt (56) mit einer ersten Dicke umfassten der an beiden Seiten in Seitenabschnitte (57) mit einer zweiten Dicke übergeht, die geringer ist als die erste Dicke, wobei die ersten Filmscharniere (50) entlang der Seitenabschnitte dünner sind als entlang des zentralen Abschnitts.

4. Installationsdose (10) nach einem der vorstehenden Ansprüche, wobei die Spannsegmente (42) Zähne (44) umfassen, die folgend gegriffen werden durch den ersten Widerhaken (87), wobei die Zähne (44) vorzugsweise hakelnd sind, mit Sperrflächen (45), die ausgerichtet sind in Richtung des nächstangrenzenden Filmscharniers (50).

5. Installationsdose (10) nach Anspruch 4, wobei die Zähne (44) an beiden Enden in Führungskörper (46) übergehen, welche Seitenränder der Spannabschnitte (50) definieren.

6. Installationsdose (10) nach einem der vorstehenden Ansprüche, wobei der Verankerungsstreifen (30) ein zweites Filmscharnier (60) zwischen dem Spannabschnitt (42) und dem Verankerungsabschnitt (65) umfasst, wobei das zweite Filmscharnier den Verankerungsabschnitt innerhalb der Projektion der Bodenwand (11) belässt, wenn es in seiner anfänglichen Position unterhalb der Bodenwand angeordnet ist, wobei der Verankerungsabschnitt (65) vorzugsweise einen Führungsstreifen (66) umfasst, der mit dem Spannabschnitt über das zweite Filmscharnier (60) in Verbindung steht, wobei der Führungsstreifen in den Führungskanal (72) eintritt, wenn der Spannabschnitt durch den Führungskanal in der Spannrichtung (T) geführt wird, wobei der Verankerungsabschnitt (65) sich vorzugsweise nach außerhalb der Projektion der Bodenwand neigt, wenn der Führungsstreifen (66) in den Führungskanal (73) eintritt.

7. Installationsdose (10) nach einem der vorstehenden Ansprüche, wobei der Führungskanal (73) an der Seite offen ist, die von der Umfangswand (12) weg weist, wo er längsseits begrenzt ist durch zwei parallele, zugewandte, überhängende Kanten (74), die den Verankerungsstreifen (30) einschließen.

8. Installationsdose (10) nach einem der vorstehenden Ansprüche, wobei der Verankerungsstreifen (30) einen Greifabschnitt (31) umfasst, der in den Spannabschnitt (42) übergeht, wobei der Greifabschnitt von dem umlaufenden Rand (14) der Installationsdose vorragt, wobei der Greifabschnitt vorzugsweise ein Loch (35) umfasst zur Aufnahme eines Ziehwerkzeugs.

9. Installationsdose (10) nach einem der vorstehenden Ansprüche, wobei der Verankerungsstreifen (30) eine Kunststoffeinheit bildet, vorzugsweise aus einem Thermoplasten, insbesondere Polyoxymethylen (POM).

10. Installationsdose (10) nach einem der vorstehenden Ansprüche, umfassend einen separaten Einsatz (80), der in einen Aufnahmeraum (100) in der Umfangswand (12) eingesetzt ist, wobei der Einsatz sich über den Führungskanal (73) erstreckt und den ersten Widerhaken (87) umfasst, der in den Führungskanal ragt, wobei der Einsatz (80) vorzugsweise einen zweiten Widerhaken (86) umfasst, der den Einsatz in dem Aufnahmeraum (100) eingeschlossen hält.

11. Installationsdose (10) nach Anspruch 10, umfassend einen ersten Flansch (22), der von dem umlaufenden Rand (14) der Umfangswand vorsteht und wobei der Einsatz (80) einen zweiten Flansch (82) umfasst, der von dem umlaufenden Rand (14) der Umfangswand vorsteht, wobei der erste Flansch und der zweite Flansch räumlich entlang des umlaufenden Randes der Umfangswand voneinander getrennt angeordnet sind.

12. Installationsdose (10) nach einem der vorstehenden Ansprüche, wobei der Einsatz (80) aus Stahl hergestellt ist.

13. Installationsdose (10) nach einem der vorstehenden Ansprüche, wobei die Bodenwand (11) und die Umfangswand (12) eine Kunststoffeinheit, vorzugsweise aus Polypropylen, bilden.

14. Verfahren zum Installieren einer Installationsdose (10) in einer Hohlwand (1), wobei die Hohlwand eine Frontplatte (2) mit einem Loch zum Einführen der Installationsdose von der Vorderseite der Frontplatte her aufweist, und wobei die Installationsdose eine Bodenwand (11) und eine Umfangswand (12) mit einem umlaufenden Rand aufweist, der eine Installationsöffnung der Installationsdose begrenzt, wobei die Installationsdose einen Führungskanal (73) in der Umfangswand aufweist, der parallel zu der Mittellinie (S) der Umfangswand verläuft und in dem ein Verankerungsstreifen (30) verschiebbar eingeschlossen ist, wobei der Verankerungsstreifen einen länglichen Spannabschnitt (41) umfasst, der in einer Spannrichtung (T) durch den Führungskanal geführt wird, sowie einen Verankerungsabschnitt (65) zum Greifen der Rückseite der Frontplatte, wobei die Installationsdose einen ersten Widerhaken (87) umfasst, der mit der Umfangswand in Verbindung steht und der den Spannabschnitt greift, um eine Bewegung des Verankerungsstreifens mit dem Verankerungsabschnitt von dem umfänglichen Rand der Umfangswand weg zu verhindern, und wobei der Spannabschnitt mehrere längliche Spannsegmente (42) umfasst, die entlang ihrer länglichen Seiten in Reihe über erste Filmscharniere (50) verbunden sind, die wählbare Zielbrüche in dem Spannabschnitt bilden, wobei das Verfahren die Schritte umfasst des Einsetzens der Installationsdose (10) in das Loch, des Ziehens des Verankerungsstreifens (30) in der Spannrichtung (T), bis der Verankerungsabschnitt (65) die Frontplatte (2) greift und des Knickens (B) oder Verdrehens (Q) des Spannabschnitts (41) an der Stelle, wo der Verankerungsstreifen von dem umlaufenden Rand (14) vorsteht, wobei der Spannabschnitt an dem ersten Filmscharnier (50) reißt, das am Nächsten zum umlaufenden Rand ist.

## Revendications

1. Boîte d'installation (10) pour une paroi creuse (1), dans laquelle la paroi creuse comprend une plaque avant (20) avec un trou pour l'insertion de la boîte d'installation à partir du côté avant de la plaque avant, et dans laquelle la boîte d'installation comprend une paroi inférieure (11) et une paroi circonférentielle (12) avec un bord circonférentiel (14) qui délimite une ouverture d'installation de la boîte d'installation, dans laquelle la boîte d'installation comprend un canal de guidage (73) dans la paroi circonférentielle qui s'étend parallèlement à la ligne centrale (S) de la paroi circonférentielle et dans lequel une bande d'ancrage (30) est confinée de manière coulissante, dans laquelle la bande d'ancrage comprend une section de tension allongée (41) qui est guidée à travers le canal de guidage dans une direction de tension (T), et une section d'ancrage (65) pour la mise en prise du côté arrière de la plaque avant, dans laquelle la boîte d'installation comprend un premier ardillon (87) qui est raccordé à la paroi circonférentielle et qui met en prise la section de tension pour empêcher le mouvement de la bande d'ancrage avec la section d'ancrage à distance du bord circonférentiel de la paroi circonférentielle, **caractérisée en ce que** la section de tension comprend plusieurs segments de tension allongés (42) qui sont raccordés entre eux en série le long de leurs côtés allongés au moyen de premières charnières actives (50) qui forment des fractures cibles sélectionnables dans la section de tension.

2. Boîte d'installation (10) selon la revendication 1, dans laquelle les segments de tension (42) définissent des ouvertures en forme de V (47, 59) au-dessus et au-dessous des premières charnières actives (50).

3. Boîte d'installation (10) selon la revendication 1 ou 2, dans laquelle les segments de tension (42) comprennent une partie centrale (56) avec une première épaisseur qui fusionne des deux côtés en parties latérales (57) avec une seconde épaisseur qui est inférieure à la première épaisseur, moyennant quoi les premières charnières actives (50) sont plus fines le long des parties latérales que le long de la partie centrale.

4. Boîte d'installation (10) selon l'une quelconque des revendications précédentes, dans laquelle les segments de tension (42) comprennent des dents (44) qui sont sensiblement mises en prise par le premier ardillon (87), dans laquelle les dents (44) sont de préférence barbelées, ayant des faces de verrouillage (45) qui sont dirigées vers la charnière active (50) adjacente la plus proche.

5. Boîte d'installation (10) selon la revendication 4, dans laquelle les dents (44), au niveau des deux côtés, fusionnent en corps de guidage (46) qui définissent des bords latéraux des sections de tension (50).

6. Boîte d'installation (10) selon l'une quelconque des revendications précédentes, dans laquelle la bande d'ancrage (30) comprend une seconde charnière active (60) entre la section de tension (42) et la section d'ancrage (65), dans laquelle la seconde charnière active maintient la section d'ancrage dans la saillie de la paroi inférieure (11) lorsqu'elle est positionnée dans sa position initiale au-dessous de la paroi inférieure, dans laquelle la section d'ancrage (65) comprend de préférence une bande de guidage (66) qui est raccordée avec la section de tension (42) via la seconde charnière active (60), dans laquelle la bande de guidage entre dans le canal de guidage (73) lorsque la section de tension est guidée à travers le canal de guidage dans la direction de tension (T), dans laquelle la section d'ancrage (65) incline de préférence vers l'extérieur la saillie de la paroi inférieure lorsque la bande de guidage (66) pénètre dans le canal de guidage (73).

7. Boîte d'installation (10) selon l'une quelconque des revendications précédentes, dans laquelle le canal de guidage (73) est ouvert au niveau du côté qui est à l'opposé de la paroi circonférentielle (12), où il est délimité parallèlement par deux bords en surplomb orientés parallèlement (74) qui confinent la bande d'ancrage (30).

8. Boîte d'installation (10) selon l'une quelconque des revendications précédentes, dans laquelle la bande d'ancrage (30) comprend une section de préhension (31) qui fusionne en section de tension (42), dans laquelle la section de préhension fait saillie du bord circonférentiel (14) de la boîte d'installation, dans laquelle la section de préhension (31) comprend de préférence un trou (35) pour recevoir un outil de traction.

9. Boîte d'installation selon l'une quelconque des revendications précédentes, dans laquelle la bande d'ancrage (30) forme une unité en plastique, de préférence un thermoplastique, en particulier du polyoxyméthylène (POM).

10. Boîte d'installation selon l'une quelconque des revendications précédentes, comprenant un insert séparé (80) qui est inséré dans un espace de logement (100) dans la paroi circonférentielle (12), dans laquelle l'insert s'étend sur le canal de guidage (73) et comprend le premier ardillon (87) qui fait saillie dans le canal de guidage, dans laquelle l'insert (80) comprend de préférence un second ardillon (86) qui maintient l'insert confiné dans l'espace de logement (100).

11. Boîte d'installation (10) selon la revendication 10, comprenant une première bride (22) qui fait saillie du bord circonférentiel (14) de la paroi circonférentielle, et dans laquelle l'insert (80) comprend une seconde bride (82) qui fait saillie du bord circonférentiel (14) de la paroi circonférentielle, dans laquelle la première bride et la seconde bride sont positionnées espacées l'une de l'autre le long du bord circonférentiel de la paroi circonférentielle.

12. Boîte d'installation (10) selon l'une quelconque des revendications précédentes, dans laquelle l'insert (80) est réalisé à partir d'acier.

13. Boîte d'installation (10) selon l'une quelconque des revendications précédentes, dans laquelle la paroi inférieure (11) et la paroi circonférentielle (12) forment une unité en plastique, de préférence en polypropylène.

14. Procédé pour installer une boîte d'installation (10) dans une paroi creuse (1), dans lequel la paroi creuse comprend une plaque avant (2) avec un trou pour l'insertion de la boîte d'installation à partir du côté avant de la plaque avant, et dans lequel la boîte d'installation comprend une paroi inférieure (11) et une paroi circonférentielle (12) avec un bord circonférentiel qui délimite une ouverture d'installation de la boîte d'installation, dans lequel la boîte d'installation comprend un canal de guidage (73) dans la paroi circonférentielle qui s'étend parallèlement à la ligne centrale (S) de la paroi circonférentielle et dans lequel une bande d'ancrage (30) est confinée de manière coulissante, dans lequel la bande d'ancrage comprend une section de tension allongée (41) qui est guidée à travers le canal de guidage dans une direction de tension (T), et une section d'ancrage (65) pour la mise en prise du côté arrière de la plaque avant, dans lequel la boîte d'installation comprend un premier ardillon (87) qui est raccordé avec la paroi circonférentielle et qui met en prise la section de tension pour empêcher le mouvement de la bande d'ancrage avec la section d'ancrage à distance du bord circonférentiel de la paroi circonférentielle, et dans lequel la section de tension comprend plusieurs segments de tension allongés (42) qui sont raccordés entre eux en série le long de leurs côtés allongés au moyen des premières charnières actives (50) qui forment des fractures cibles sélectionnables dans la section de tension, dans lequel le procédé comprend les étapes pour insérer la boîte d'installation (10) dans le trou, tirer la bande d'ancrage (30) dans la direction de tension (T) jusqu'à ce que la section d'ancrage (65) mette en prise la plaque avant (2), et boucler (B) ou torsader (Q) la section de tension (41) à l'emplacement dans lequel la bande d'ancrage fait saillie du bord circonférentiel (14), moyennant quoi la section de tension se rompt au niveau de la première charnière active (50) qui est la plus proche du bord circonférentiel.
